# EUROPÄISCHE PATENTSCHRIFT

(11) **EP 4 034 453 B1**
(45) Veröffentlichungstag und Bekanntmachung des Hinweises auf die Patenterteilung: **20.08.2025**
(21) Anmeldenummer: 20765251.2
(22) Anmeldetag: 01.09.2020
(51) Int. Cl.: B62D 35/00, B62D 37/02

(54) **LUFTLEITEINRICHTUNG IM UNTERBODENBEREICH EINES KRAFTWAGENS UND KRAFTWAGEN MIT EINER SOLCHEN LUFTLEITEINRICHTUNG**
AIR GUIDE DEVICE IN THE UNDERCARRIAGE REGION OF A MOTOR VEHICLE, AND MOTOR VEHICLE COMPRISING SUCH AN AIR GUIDE DEVICE
DISPOSITIF DE GUIDAGE D'AIR DANS LA RÉGION DE CHÂSSIS DE ROULEMENT D'UN VÉHICULE À MOTEUR, ET VÉHICULE À MOTEUR COMPRENANT UN TEL DISPOSITIF DE GUIDAGE D'AIR

(30) Priorität: 23.09.2019 DE 102019006675
(43) Veröffentlichungstag der Anmeldung: 03.08.2022
(73) Patentinhaber: Mercedes-Benz Group AG, 70372 Stuttgart (DE)
(72) Erfinder: DÖRR, Jasmin, 71739 Oberriexingen (DE); ZIPPERLE, Siegfried, 71134 Aidlingen (DE); BECKER, Dirk, 71686 Remseck (DE); MUELLER, Alexander, 71069 Sindelfingen (DE); WIGGEN, Stefan, 71272 Renningen (DE); RAUH, Waldemar, 75365 Calw (DE)
(74) Vertreter: Novagraaf Group
(86) Internationale Anmeldenummer: PCT/EP2020/074282
(87) Internationale Veröffentlichungsnummer: WO 2021/058235

(56) Entgegenhaltungen:
- GB-A- 2 539 975
- US-A- 4 159 140
- US-A1- 2019 061 839
- US-A1- 2019 152 543

## Beschreibung

Die Erfindung betrifft eine Luftleiteinrichtung im Unterbodenbereich eines Kraftwagens gemäß dem Oberbegriff des Anspruchs 1 sowie einen Kraftwagen nach Anspruch 5.

Aus der DE 10 2010 053 463 A1 geht eine Luftleiteinrichtung hervor, bei welcher ein in Fahrzeuglängsrichtung vor einem jeweiligen Fahrzeugrad ein zugeordnetes Luftleitelement in Form eines Radspoilers vorgesehen ist, welches jeweils aus einer ausgefahrenen Leitstellung, in welcher das Luftleitelement beziehungsweise der Radspoiler mit einer in Fahrzeuglängsrichtung in einem vorderen Bereich des Luftleitelements vorgesehenen Leitfläche eine in Vorwärtsfahrtrichtung des Kraftwagens im Unterbodenbereich auf das Luftleitelement treffende Luftströmung umleitet, in eine zumindest teilweise eingefahrene Schutzstellung mittels einer Verlagerungskinematik verlagerbar ist. Die Radspoiler sind dabei jeweils entlang einer in Fahrzeughochrichtung orientierten Führung aus der Leitstellung in die zumindest teilweise eingefahrene Stellung verlagerbar. Die in ihrer Leitstellung angeordneten Radspoiler sollen während der Fahrt des Kraftwagens verhindern, dass die Luft frontal auf den Reifen des jeweiligen Rades auftrifft, was zu einer nicht gewünschten Erhöhung des Luftwiderstands des Kraftwagens führt. Um beispielsweise bei Geländefahrten die Radspoiler vor Beschädigung zu schützen, können diese aktiv in ihre von der Fahrbahn weiter entfernte Schutzstellung zurückverfahren. Nachteilig bei der bekannten Luftleiteinrichtung ist, dass beim Überfahren eines unerwartet auf der Fahrbahn befindlichen Hindernisses der in Luftleitstellung angeordnete Radspoiler im Kollisionsfall hierbei beschädigt oder gar abgerissen werden kann.

Aus der DE 20 2018 107 288 U1 geht eine Luftleitvorrichtung hervor, die am Unterboden eines Personenkraftwagens in einem bugseitigen Endbereich angeordnet ist und ein Luftleitelement umfasst, welches über eine an seinem heckseitigen Rand angeordnete Scharnieranordnung um eine Achse schwenkbar gelagert ist. Das flächige, praktisch den ganzen Kraftwagenvorbau von unten abdeckende Luftleitelement ist zwischen einer abgesenkten Aktivierungsstellung, in der es an seinem frontseitigen Rand in Richtung der Fahrbahn abgeklappt ist, und einer eingeklappten Ruhestellung um die Achse schwenkbar. Dabei ist das Luftleitelement mittels einer Schraubenfeder in Richtung seiner Aktivierungsstellung vorgespannt, sodass beim Überfahren eines Hindernisses das Luftleitelement zurückklappen und damit ausweichen kann. Zur Rückverlagerung des Luftleitelements in seine Ruhestellung ist ein motorgetriebener Seilzug vorgesehen. Es hat sich gezeigt, dass bei einem Anprall eines Hindernisses nicht in allen Fällen das Zurückklappen des Luftleitelements in seine Ruhestellung erfolgt und es zu Beschädigungen kommen kann.

Aus der US 2019/0152543 A1 geht eine gattungsgemäße Luftleiteinrichtung für den Unterbodenbereich eines Kraftwagens hervor.

Aufgabe der vorliegenden Erfindung ist es, eine Luftleiteinrichtung der eingangs genannten Art zu schaffen, bei welcher Beschädigungen des jeweiligen Luftleitelements in Folge von Geländefahrten oder Überfahrten von Hindernissen auf zuverlässigere Weise vermieden werden können und welche in einfacher und kostengünstiger Weise funktionssicher ausgeführt werden kann.

Diese Aufgabe wird erfindungsgemäß durch eine Luftleiteinrichtung mit den Merkmalen des Anspruchs 1 und einen Kraftwagen nach Anspruch 5 gelöst. Vorteilhafte Ausgestaltungen mit zweckmäßigen Weiterbildungen der Erfindung sind Gegenstand der abhängigen Ansprüche.

Die erfindungsgemäße Luftleiteinrichtung umfasst ein Luftleitelement, welches mittels der Verlagerungskinematik in einer überlagerten Verlagerungsbewegung in Fahrzeuglängsrichtung nach hinten und in Fahrzeughochrichtung nach oben verlagerbar ist. Dessen Leitfläche ist zumindest in einem Teilbereich als - vorzugsweise in Fahrzeuglängsrichtung von vorne oben nach hinten unten schräg geneigte - Rampe ausgebildet. Das Luftleitelement wird beziehungsweise ist mittels der Verlagerungskinematik bei einer in Fahrzeuglängsrichtung auf das Luftleitelement wirkenden hindernisbedingten Kraftkomponente in die eingefahrene Stellung verlagert beziehungsweise verlagerbar. Infolge der Ausgestaltung der Verlagerungskinematik und/oder der Form des Luftleitelements führt eine in Fahrzeuglängsrichtung wirkende Kraftkomponente einer in Folge eines Aufpralls auf ein Hindernis einwirkenden Kraft zu einer Verlagerung des Luftleitelements in die zumindest teilweise eingefahrene Stellung, um hierdurch dessen Beschädigung zu vermeiden. Ein Kern der vorliegenden Erfindung ist es demzufolge, dass das Luftleitelement bei einem Auftreffen auf ein Hindernis in Folge der dann eingeleiteten und in Folge der Vorwärtsfahrtrichtung des Kraftwagens entstehenden, in Fahrzeuglängsrichtung nach hinten wirkenden Kraftkomponente automatisch beziehungsweise zwangsgesteuert in die eingefahrene Stellung verlagert wird. Hierdurch können Beschädigungen des Luftleitelements sowie auch von an das Luftleitelement angrenzenden Bauteilen des Unterbodens oder anderen Komponenten im Unterbodenbereich des Kraftwagens wirkungsvoll verhindert werden.

Bei dem erfindungsgemäßen Luftleitelement der Luftleiteinrichtung handelt es sich um einen Radspoiler, welcher in Fahrzeuglängsrichtung vor einem zugeordneten Rad, insbesondere einem Vorderrad, des Kraftwagens angeordnet ist. Mittels eines derartigen Radspoilers lassen sich besonders günstige aerodynamische Effekte im Unterbodenbereich erzielen, um beispielsweise Energie zum Antrieb des Kraftwagens einzusparen.

Aufgrund der vorzugsweise zumindest in einem Teilbereich als in Fahrzeuglängsrichtung von vorne oben nach hinten unten schräg geneigte Rampe beziehungsweise Schräge oder schiefe Ebene ausgebildeten Luftleitelement wird dieses selbsttätig beim Auftreffen auf ein Hindernis besonders günstig und zuverlässig in die zumindest teilweise eingefahrene Stellung verlagert. Genauer gesagt wird eine in Fahrzeuglängsrichtung nach hinten auf das Luftleitelement wirkende Kraft hierdurch in eine unter anderem in Fahrzeughochrichtung auf das Luftleitelement wirkende Kraft umgesetzt beziehungsweise zerlegt, welche das Luftleitelement in die eingefahrene Stellung bewegt.

Durch das Vorsehen der Schräge kann es auch nicht zu einem Verhaken des Luftleitelements beziehungsweise der Luftleitfläche mit dem jeweiligen Hindernis kommen, was zu einem Abreißen oder dergleichen Beschädigen des Luftleitelements führen könnte. Vielmehr ist die entsprechend geneigte Rampe vorzugsweise relativ glatt ausgebildet und auch beispielsweise in der Materialstärke und/oder Materialbeschaffenheit so gewählt, dass es beim Auftreffen des Hindernisses auf die Leitfläche zu keinen Beschädigungen des Luftleitelements kommen kann.

Aufgrund der vorgesehenen Verlagerungskinematik, um das Luftleitelement in einer überlagerten Verlagerungsbewegung in Fahrzeuglängsrichtung nach hinten und in Fahrzeughochrichtung nach oben zu verlagern, kann eine in Fahrzeuglängsrichtung nach hinten wirkende hindernisbedingte Kraftkomponente ebenfalls besonders günstig - parallel zur Verlagerungsbewegung in Fahrzeuglängsrichtung nach hinten - in eine Verlagerungsbewegung in Fahrzeughochrichtung nach oben umgesetzt werden. Eine derartige Verlagerungsbewegung des Luftleitelements in Fahrzeughochrichtung nach oben ist nämlich erforderlich, um die Bodenfreiheit des Kraftwagens im Unterbodenbereich zu erhöhen, um Beschädigungen des jeweiligen Luftleitelements zu vermeiden. Genauer gesagt wird eine in Fahrzeuglängsrichtung nach hinten auf das Luftleitelement wirkende Kraft durch geeignete Ausgestaltung der Verlagerungskinematik so in eine Bewegung des Luftleitelements in Fahrzeughochrichtung in die eingefahrene Stellung umgesetzt. Die kann beispielsweise und insbesondere durch Ausgestaltung einer geeigneten Mehrgelenkhebelkinematik erfolgen; alternativ wäre jedoch auch eine Kulissenführung oder dergleichen denkbar.

Als besonders vorteilhaft hat es sich gezeigt, wenn die Verlagerungskinematik als Mehrgelenkhebelkinematik, insbesondere als Viergelenkhebelkinematik, ausgebildet ist. Mittels einer solchen Mehrgelenkhebelkinematik lässt sich besonders vorteilhaft eine Verlagerungsbewegung des Luftleitelements in Folge einer in Fahrzeuglängsrichtung auf das Luftleitelement wirkenden hindernisbedingten Kraftkomponente in die eingefahrene Stellung erzeugen. Dabei ergibt sich eine besonders stabile Abstützung des Luftleitelements beim Auftreffen auf ein Hindernis sowie eine besonders günstige und zuverlässige Verlagerungsbewegung in die eingefahrene Stellung.

Erfindungsgemäß ist weiterhin vorgesehen, dass der Verlagerungskinematik eine Verlagerungseinheit zugeordnet ist, mittels welcher das Luftleitelement aus der eingefahrenen Stellung in die Leitstellung verstellbar ist. Mit anderen Worten erfolgt die Verstellung des jeweiligen Luftleitelements in die Leitstellung vorzugsweise mittels einer Verlagerungseinheit, da dies zu einer besonders zuverlässigen Verlagerung führt. Alternativ hierzu wäre es jedoch auch denkbar, die Verlagerungsbewegung des Luftleitelements aus der eingefahrenen Stellung in die Leitstellung beispielsweise lediglich in Folge eines im Bereich des Luftleitelements entstehenden Staudrucks zu bewerkstelligen. Mit der Verlagerungseinheit ist das jeweilige Luftleitelement beispielsweise auch geschwindigkeitsabhängig regelbar.

Erfindungsgemäß ist ferner vorgesehen, dass die Verlagerungseinheit ein Federelement umfasst, mittels welcher das Luftleitelement aus der eingefahrenen Stellung in die Leitstellung verstellbar und/oder in der Leitstellung gegen einen Anschlag haltbar ist. Hierdurch wird eine besonders zuverlässige Verlagerung und Halterung des Luftleitelements in die beziehungsweise in der Leitstellung erreicht. Außerdem kann hierbei auf einfache Weise bei einer in Fahrzeuglängsrichtung auf das Luftleitelement wirkenden hindernisbedingten Kraftkomponente eine Verlagerung des Luftleitelements gegen die Kraft des Federelements in die eingefahrene Stellung bewirkt werden.

Eine besonders günstige Fernbetätigung des jeweiligen Luftleitelements lässt sich dabei über ein Zugmittel erreichen. Ein derartiges Zugmittel ist besonders einfach betätigbar und darüber hinaus äußerst betriebssicher. Es eignet sich hierbei beispielsweise insbesondere ein Bowdenzug.

Eine weitere vorteilhafte Ausgestaltungsform der Erfindung sieht vor, dass mittels der Verlagerungseinheit eine Mehrzahl von Luftleitelementen, insbesondere ein jeweiliger Radspoiler pro Fahrzeugseite, aus der eingefahrenen Stellung in die Leitstellung verstellbar ist. Somit ergibt sich eine besonders günstige bauliche Vereinfachung der Luftleiteinrichtung, da mit ein und derselben Verlagerungseinheit eine Mehrzahl von Luftleitelementen betätigt werden kann.

Schließlich hat es sich als vorteilhaft gezeigt, wenn das jeweilige Luftleitelement mit zugeordneter Verlagerungskinematik in einem Gehäuse gelagert aufgenommen ist. Somit lässt sich die Luftleiteinrichtung als weitestgehend vormontierbare Baueinheit herstellen. Zudem ist das jeweilige Luftleitelement in der eingefahrenen Stellung besonders günstig zumindest teilweise innerhalb des zugeordneten Gehäuses untergebracht.

Weitere Vorteile und Einzelheiten der Erfindung ergeben sich aus der nachfolgenden Beschreibung eines bevorzugten Ausführungsbeispiels sowie anhand der Zeichnung.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:

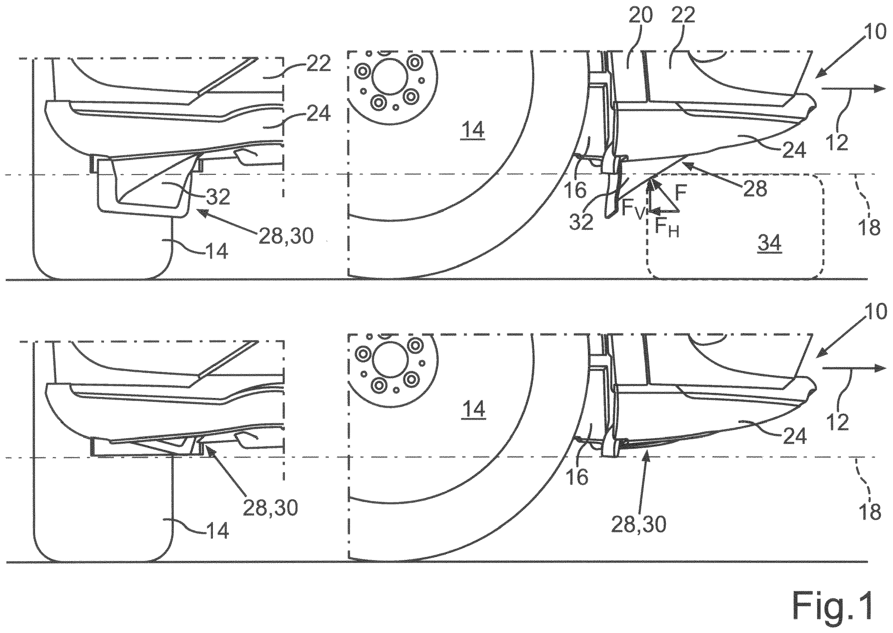

- Fig. 1: jeweils eine ausschnittsweise Vorderansicht und eine ausschnittsweise Seitenansicht auf einen Unterbodenbereich eines Kraftwagens mit einer Luftleiteinrichtung mit einem vorderseitig eines korrespondierenden Vorderrads angeordneten Luftleitelement, welches in den oberen Darstellungen in einer ausgefahrenen Leitstellung gezeigt ist, und welches in den beiden unteren Darstellungen in eine zumindest teilweise eingefahrene Stellung mittels einer Verlagerungskinematik verlagert ist, wobei das Luftleitelement mittels der Verlagerungskinematik bei einer in Fahrzeuglängsrichtung auf das Luftleitelement wirkenden, durch einen Fremdkörper bei der Vorwärtsfahrt des Kraftwagens erzeugten hindernisbedingten Kraftkomponente in die eingefahrene Stellung verlagert worden ist;
- Fig. 2: eine ausschnittsweise Schnittansicht durch die Luftleiteinrichtung gemäß Fig. 1 entlang einer in Fahrzeughochrichtung beziehungsweise in Fahrzeuglängsrichtung verlaufenden Schnittebene, wobei sich das Luftleitelement durch die Verlagerungskinematik in seiner die Aerodynamik des Kraftwagens beeinflussenden Leitstellung gehalten ist;
- Fig. 3: eine ausschnittsweise Schnittansicht auf die Luftleiteinrichtung analog zu Fig. 2, wobei das Luftleitelement mittels der Verlagerungskinematik in Folge einer auf diese wirkenden hindernisbedingten Kraftkomponente in die eingefahrene Stellung verlagert worden ist;
- Fig. 4a, 4b: jeweilige perspektivische Unteransichten auf die Luftleiteinrichtung bei sich in der Leitstellung beziehungsweise in der zumindest teilweise eingefahrenen Stellung befindendem Luftleitelement;
- Fig. 5: eine Perspektivansicht auf die erfindungsgemäße Luftleiteinrichtung im Unterbodenbereich, wobei insbesondere eine Integration des Luftleitelements in die angrenzenden Verkleidungselemente sowie eine Verlagerungseinheit der Verlagerungskinematik erkennbar sind;
- Fig. 6: eine weitere Perspektivansicht auf die Luftleiteinrichtung im Unterbodenbereich analog zu Fig. 5, jedoch bei geschnitten dargestelltem Gehäuse, in welchem die Verlagerungskinematik des sich in der Leitstellung befindenden Luftleitelements gelagert aufgenommen ist; und in
- Fig. 7: eine ausschnittsweise und perspektivische Schnittansicht auf die Luftleiteinrichtung bei sich in der eingefahrenen Stellung befindendem Luftleitelement.

Fig. 1 zeigt jeweils in einer ausschnittsweisen Vorderansicht beziehungsweise Seitenansicht einen Unterbodenbereich eines Personenkraftwagens nahe eines Kraftwagenbugs 10. Erkennbar ist dabei bezogen auf eine mit einem Pfeil 12 angedeutete Vorwärtsfahrtrichtung ein rechtes Vorderrad 14, welches auch in den jeweiligen Vorderansichten gemäß Fig. 1 erkennbar ist. Das Vorderrad 14 ist in einem Radhaus aufgenommen, welches durch eine Radhausverkleidung 16 außenumfangsseitig beziehungsweise innen ausgekleidet ist. Nach unten hin erstreckt sich diese Radhausverkleidung 16 bis zu einer durch eine gestrichelte Linie 18 angedeuteten, parallel zum vorliegend ebenen Untergrund angedeuteten horizontalen Ebene, welche auch als Grenzfläche - Bodenfreiheit bezeichnet wird.

Vorderseitig der Radhausverkleidung 16 sind jeweilige Verkleidungselemente 20, 22 des Radhauses beziehungsweise des Kraftwagenbugs 10 erkennbar, welche häufig - wie auch der gezeigte Teil der Radhausverkleidung 16 - einem Frontendmodul des Personenkraftwagens zugeordnet sind. Unterseitig ist überdies ein Verkleidungselement 24 einer Unterbodenverkleidung 26 dargestellt, welches bei diesem Ausführungsbeispiel ebenfalls dem Frontendmodul zugeordnet ist. Zur Verwendung der im Folgenden beschriebenen Luftleiteinrichtung 28 im Zusammenhang mit einem Kraftwagen ist es nicht zwingend notwendig, dass dieser ein Frontendmodul aufweist.

Von einer im Unterbodenbereich angeordneten Luftleiteinrichtung 28 ist in Fig. 1 im Besonderen ein Luftleitelement 30 erkennbar, welches vorliegend als sogenannter Radspoiler in Fahrzeuglängsrichtung vor dem korrespondierenden Vorderrad 14 angeordnet ist. Wie insbesondere aus der oberen Vorderansicht der Fig. 1 erkennbar ist, befindet sich das hier in einer ausgefahrenen Luftleitstellung angeordnete Luftleitelement 30 - in Fahrzeugquerrichtung gesehen - in zumindest teilweiser seitlicher Überdeckung mit dem korrespondierenden Vorderrad 14. Insbesondere mit einer in Fahrzeuglängsrichtung (Pfeil 12) in einem vorderen Bereich des Luftleitelements 30 vorgesehenen Leitfläche 32 ist dabei in der in den beiden oberen Darstellungen von Fig. 1 gezeigten Leitstellung des Luftleitelements 30 eine in Vorwärtsfahrtrichtung des Kraftwagens im Unterbodenbereich auf das Luftleitelement 30 treffende Luftströmung umleitbar, sodass die fahrtbedingte Luftströmung in diesem Bereich nicht frontal auf das Vorderrad 14 prallt, wodurch sich eine verbesserte Anströmung des entsprechenden Vorderrads 14 realisieren lässt, um somit insgesamt die Aerodynamik des Kraftwagens im Unterbodenbereich zu verbessern und hierdurch insbesondre Energie beim Antrieb des Kraftwagens einzusparen.

Wie des Weiteren aus den beiden oberen Darstellungen von Fig. 1 erkennbar ist, steht der Radspoiler beziehungsweise das Luftleitelement 30 und insbesondere dessen Leitfläche 32 nach unten aus der übrigen Unterbodenverkleidung 26 heraus. Der Radspoiler beziehungsweise das Luftleitelement 30 sollen dabei verhindern, dass die Luft bei der Fahrt des Kraftfahrzeugs frontal gegen den jeweils zugehörigen Reifen prallt und damit den Strömungswiderstand des Kraftfahrzeugs erhöht. In der Leitstellung trifft die von vorne anströmende Luftströmung demzufolge insbesondere auf die Leitfläche 32 des Luftleitelements 30 auf, wird entsprechend umgeleitet, strömt an dem jeweiligen Luftleitelement 30 entlang und wird durch die konkrete Form des Radspoilers beziehungsweise Luftleitelements 30 gezielt geleitet, sodass das dahinter angeordnete Vorderrad 14 besser angeströmt beziehungsweise die Luft an diesem zumindest teilweise seitlich vorbeigeleitet wird, was beispielsweise im Bereich der inneren Flanke des Vorderrads 14 der Fall ist. Hierdurch verbessern sich die aerodynamischen Eigenschaften im Unterbodenbereich mit den bereits beschriebenen Vorteilen.

Allerdings kann es im Fahrbetrieb des Kraftwagens in Vorwärtsfahrtrichtung zu Fahrsituationen kommen, bei welchen das jeweilige Luftleitelement 30 auf einen in der rechten oberen Darstellung von Fig. 1 angedeuteten Fremdkörper 34 beziehungsweise ein andersartiges Hindernis auftrifft. Insbesondere ergeben sich solche Konstellationen bei Geländefahrten oder beim Überfahren von Hindernissen in urbanen Gebieten, also beispielsweise beim Überfahren von Bordsteinen oder anderen, unerwartet auf der Fahrbahn befindlichen Hindernissen.

Wie aus Fig. 1 in der rechten oberen Darstellung erkennbar ist, führt ein Auftreffen des ausgefahrenen, in seiner Luftleitstellung angeordneten Luftleitelements 30 auf ein Hindernis 34 zu einer hindernisbedingten Kraft F, welche insbesondere abhängig von der Fahrgeschwindigkeit in Vorwärtsfahrtrichtung eine entgegen der Vorwärtsfahrtrichtung in Fahrzeuglängsrichtung wirkende Kraftkomponente F_{H} sowie eine in Fahrzeughochrichtung nach oben wirkende vertikale Kraftkomponente F_{V} umfasst.

Bei einer derartigen, insbesondere in Fahrzeuglängsrichtung entgegen der Vorwärtsfahrtrichtung, also in Fahrzeuglängsrichtung nach hinten wirkenden horizontalen Kraftkomponente F_{H} kann es bislang zu erheblichen Beschädigungen oder sogar zur vollen Zerstörung des jeweiligen Luftleitelements 30 kommen. Aus diesem Grund ist vorliegend das Luftleitelement 30 aus der in den oberen beiden Figuren dargestellten Leitstellung, in welcher das jeweilige Luftleitelement als insbesondere in Anströmung auf die Vorderräder 14 beeinflussender Radspoiler ausgebildet ist, in die in den beiden unteren Darstellungen von Fig. 1 gezeigte, zumindest teilweise eingefahrene Stellung in Fahrzeughochrichtung nach oben verlagerbar. Dies erfolgt im vorliegenden Fall zum einen mittels und durch eine im Weiteren noch näher erläuterten Verlagerungskinematik. Dabei wird das jeweilige Luftleitelement 30 im vorliegenden Ausführungsbeispiel bis oberhalb der durch die Linie 18 dargestellte Ebene beziehungsweise sogenannte Grenzfläche der Bodenfreiheit nach oben hin verlagert, sodass das jeweilige Luftleitelement 30 bezogen auf die Fahrzeughochrichtung zumindest nicht tiefer angeordnet ist als übrige Bauteile der Unterbodenverkleidung 26.

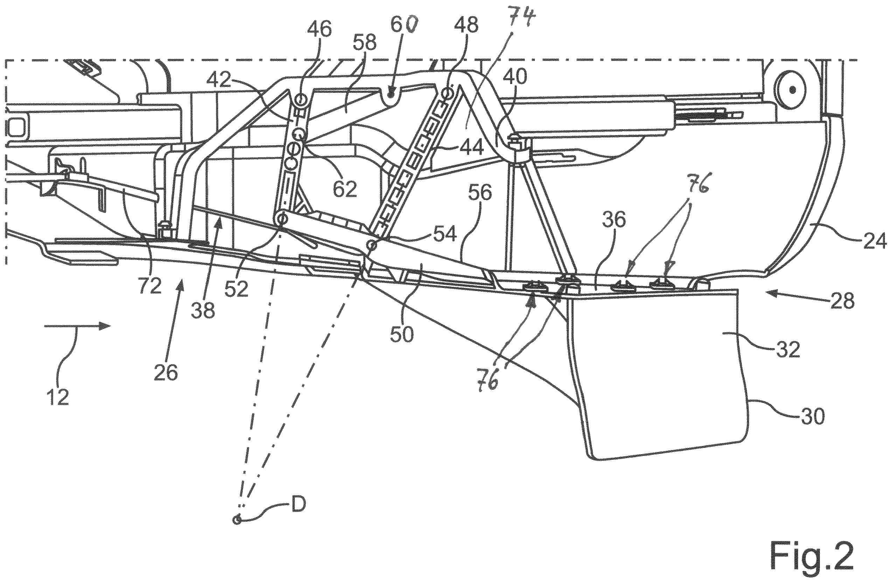

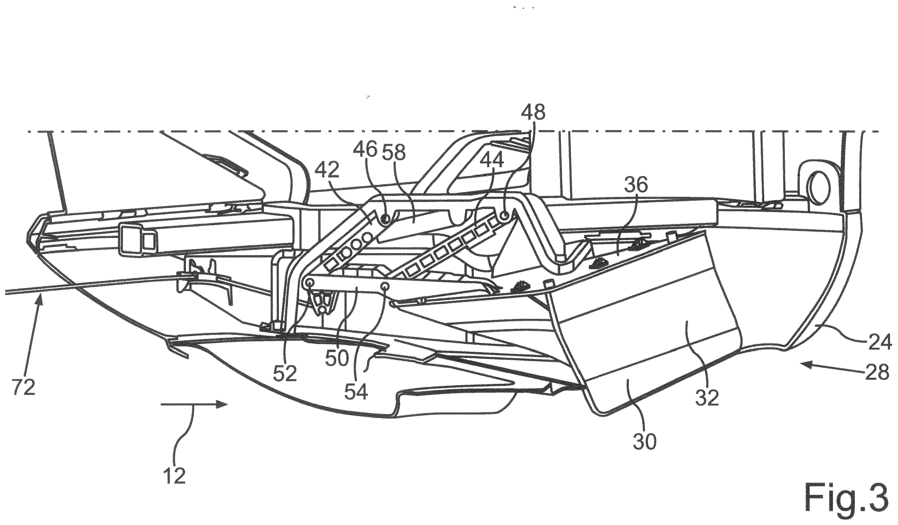

Anhand der Fig. 2 und 3 soll nun im Weiteren anhand jeweiliger ausschnittsweiser Schnittansichten entlang einer in Fahrzeughochrichtung beziehungsweise in Fahrzeuglängsrichtung verlaufenden Schnittebene die konkrete Ausgestaltung der vorliegenden Luftleiteinrichtung erläutert werden.

Insbesondere ist in Zusammenschau der Fig. 2 und 3 zunächst erkennbar, dass sich das Luftleitelement30 in Fig. 2 in seiner Leitstellung gemäß den beiden oberen Darstellungen von Fig. 1 und in Fig. 3 in seiner zumindest teilweise eingefahrenen Stellung gemäß den beiden unteren Darstellungen in Fig. 1 befindet.

Das Luftleitelement 30 ist im Wesentlichen als keilförmiger Hohlkörper beispielsweise aus einem Kunststoff hergestellt, wobei dieser Hohlkörper oberseitig durch einen Deckel 36 verschlossen ist. Das Luftleitelement 30 ist unter Vermittlung einer Verlagerungskinematik 38 an einem nach unten hin offenen Gehäuse 40 gelagert angeordnet, außerhalb welchem das Luftleitelement 30 in der Leitstellung angeordnet und innerhalb welchem das Luftleitelement 30 in der eingefahrenen Stellung zumindest teilweise angeordnet ist.

Die Verlagerungskinematik 38 ist vorliegend als Mehrgelenkhebelkinematik in Form einer Viergelenkhebelkinematik mit zwei Lenkerhebeln 42, 44 ausgebildet, welche an entsprechenden Lagerstellen 46, 48 am Gehäuse 40 gelagert sind. An ihren den Lagerstellen 46, 48 gegenüberliegenden Enden sind die beiden Lenkerhebel 42, 44 mit einem Lagerhebel 50 im Bereich jeweiliger Lagerstellen 52, 54 gelenkig verbunden, wobei der Lagerhebel 50 ein vorderes Ende 56 aufweist, über welches dieser mit dem Luftleitelement 30 beziehungsweise genauer gesagt mit dem Deckel 36 verbunden ist.

Eine Zusammenschau der Fig. 2 und 3 zeigt, dass die Lenkerhebel 42, 44 und der Lagerhebel 50 mit den Lagerstellen 46, 48 und 52, 54 insgesamt die Viergelenkshebelkinematik ausbilden, mittels welcher das Luftleitelement 30 aus der Leitstellung gemäß Fig. 2 in die eingefahrene Stellung gemäß Fig. 3 verlagert werden kann. Hierbei ergibt sich eine überlagerte Verlagerungsbewegung in Fahrzeuglängsrichtung nach hinten und in Fahrzeughochrichtung nach oben, was insbesondere anhand der Relativpositionen des Luftleitelements 30 zum Gehäuse 40 erkennbar ist. Die Verlagerungsbewegung des Luftleitelements 30 erfolgt dabei um einen theoretischen Drehpunkt D, welcher in Fig. 2 gezeigt ist und sich aus einer gedachten Verlängerung der beiden Lenkerhebel 42, 44, welche durch die jeweiligen Lagerstellen 46, 48 beziehungsweise 52, 54 ergibt.

Wichtig ist, dass zumindest die Lagerstellen 46, 48 und -wie bei dem in den Fig. 2 und 3 dargestellten Ausführungsbeispiel - gegebenenfalls auch die Lagerstellen 52, 54 der Lenkerhebel 42, 44 in Kraftwagenhochrichtung (z-Richtung im Kraftwagenkoordinatensystem) oberhalb des Luftleitelements 30 und damit dessen Luftleitfläche 32 angeordnet sind. Bei kollisionsbedingter Kraftbeaufschlagung der Luftleitfläche 32 liegen die Lagerstellen keinesfalls in Kraftwirkungsrichtung der Kollisionskraft, sodass über die Kraftzerlegung an der schiefen Ebene des Luftleitelements 30 die Kollisionskraft zu einem Verschwenken des Luftleitelements 30 entgegen der Vorwärtsfahrtrichtung des Kraftwagens nach hinten und gleichzeitig nach oben führt.

Wie des Weiteren aus den Figuren 2 und 3 erkennbar ist, ist der Lagerhebel 42 über ein Federelement 58 gegen das Gehäuse 40 abgestützt. Hierbei weist das Federelement 58 beidseitig jeweilige Gelenke 60, 62 auf, über welche das Federelement 58 mit dem Lenkerhebel 42 beziehungsweise dem Gehäuse 40 verbunden ist. Das Federelement 58 bewirkt hierbei, dass durch die Federkraft das Luftleitelement 30 unter Vermittlung der Verlagerungskinematik 38 beziehungswiese der Viergelenkshebelkinematik in die Leitstellung bewegt und verlagert wird beziehungsweise in der Leitstellung gegen den Anschlag 74 gehalten ist. Die Federkraft des Federelements 58 ist dabei so bestimmt, dass diese den auf das Luftleitelement 30 beziehungsweise auf die Leitfläche 32 wirkenden Kräften bei der Anströmung mit einer entsprechenden Luftströmung standhält, und zwar auch bei höheren Fahrgeschwindigkeiten.

Allerdings ist das Federelement 58 beziehungsweise dessen Kraft wiederum so ausgebildet, dass das Luftleitelement 30 beim Auftreffen auf einen Fremdkörper beziehungsweise ein Hindernis 34 insbesondere in Folge der in Fahrzeuglängsrichtung beziehungsweise horizontal auf das Luftleitelement 30 wirkenden hindernisbedingten Kraftkomponente F_{H} in die Ausweichstellung beziehungsweise eingefahrene Stellung gemäß Fig. 3 verlagert wird. Das vorliegend als Zugfeder oder dergleichen ausgebildete Federelement 58 wird demzufolge beim Einwirken einer hindernisbedingten Kraftkomponente F_{H} und einer damit einhergehenden Verlagerung gespannt beziehungsweise mehr gespannt. Bei der Rückverlagerung aus der eingefahrenen Stellung in die Leitstellung wird das Federelement 58 umgekehrt teilweise entspannt.

Wie des Weiteren insbesondere aus Fig. 1 aus der Darstellung rechts oben erkennbar ist, ist die Leitfläche 32 des Luftleitelements 30 zumindest in einem oberen Teilbereich als in Fahrzeuglängsrichtung von vorne oben nach hinten unten schräggeneigte Rampe ausgebildet. Dies hat den Vorteil, dass beim Auftreffen des Luftleitelements 30 auf den Fremdkörper beziehungsweise das Hindernis 34, wie dies in Fig. 1 rechts oben dargestellt ist, in der gewünschten Verlagerungsbewegung in Fahrzeuglängsrichtung nach hinten und gleichzeitig in Fahrzeughochrichtung nach oben verlagert beziehungsweise zurückgedrängt wird. Während also zum Einen die geeignete Ausgestaltung der Verlagerungskinematik 38 zur Umsetzung der in Fahrzeuglängsrichtung nach hinten auf das Luftleitelement 30 wirkenden Kraftkomponente F_{H} in eine entsprechende Kraft zum Anheben des Luftleitelements 30 führt, dient alternativ oder zusätzlich zum Anderen auch die Rampe dazu, eine entsprechende Umsetzung der in Fahrzeuglängsrichtung nach hinten auf das Luftleitelement 30 wirkenden Kraftkomponente F_{H} in eine entsprechende Kraft zum Anheben des Luftleitelements 30 zu bewerkstelligen. Die geeignete Ausgestaltung der Verlagerungskinematik 38 und der Rampe dienen somit beide dem Zweck einer entsprechenden Umsetzung der in Fahrzeuglängsrichtung nach hinten auf das Luftleitelement 30 wirkenden Kraftkomponente F_{H} in eine entsprechende Kraft zum Anheben des Luftleitelements 30. Beide Maßnahmen wirken dabei gemeinschaftlich besonders vorteilhaft. Allerdings sind beispielsweise beide Maßnahmen auch einzeln denkbar und hoch wirksam. So wäre es im Rahmen der Erfindung also auch denkbar, ein Luftleitelement ohne derartige Rampe auszugestalten, wenn die Verlagerungskinematik eine entsprechende Verlagerungsbewegung des Luftleitelements in Fahrzeuglängsrichtung nach hinten und in Fahrzeughochrichtung nach oben erlaubt und bewerkstelligt. Umgekehrt wäre auch eine Kulissenführung des Luftleitelements 30 im Wesentlichen in Fahrzeuglängsrichtung nach oben denkbar, wenn das Luftleitelement 30 im Bereich der Leitfläche 32 die beschriebene Rampe aufweist, da durch diese ebenfalls erreicht wird, dass eine in Fahrzeuglängsrichtung nach hinten auf das Luftleitelement 30 wirkenden Kraftkomponente F_{H} in eine entsprechende Kraft zum Anheben des Luftleitelements 30 umgesetzt wird. Durch die Ausgestaltung der Luftleitfläche 32 als Luftleitelement 30 wäre es somit gegebenenfalls auch denkbar, dass anstelle der Viergelenkhebelkinematik eine Führungskulisse oder eine Schwenklagerung um einen festen Drehpunkt für das Luftleitelement 30 vorgesehen wird, da die schräg verlaufende Leitfläche 32 dafür sorgt, dass eine in Fahrzeuglängsrichtung auf das Luftleitelement 30 wirkende hindernisbedingte Kraftkomponente F_{H} in Folge der schrägen Orientierung von vorne oben nach hinten unten in jedem Fall zu einer Verlagerungsbewegung des Luftleitelements in Fahrzeughochrichtung nach oben führen würde mit einer Kraft F_{V}. Mit anderen Worten wäre es bei Vorsehen einer schrägen Leitfläche 32 auch möglich, das Luftleitelement 30 entlang einer in Fahrzeughochrichtung verlaufenden linearen oder gebogenen Führung zu verlagern, und zwar in Folge der durch die Leitfläche 32 erzeugten, in Fahrzeughochrichtung auf das Luftleitelement 30 wirkenden, hindernisbedingten Kraft.

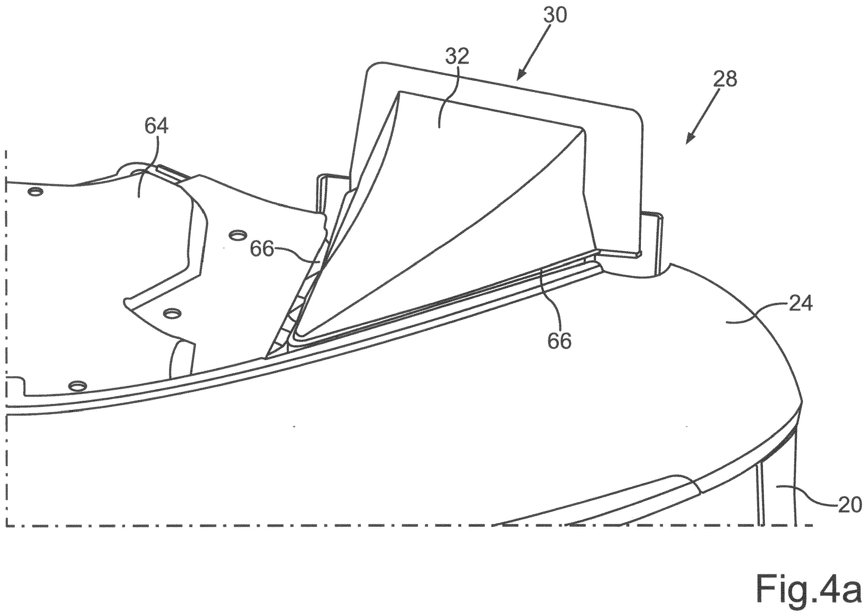

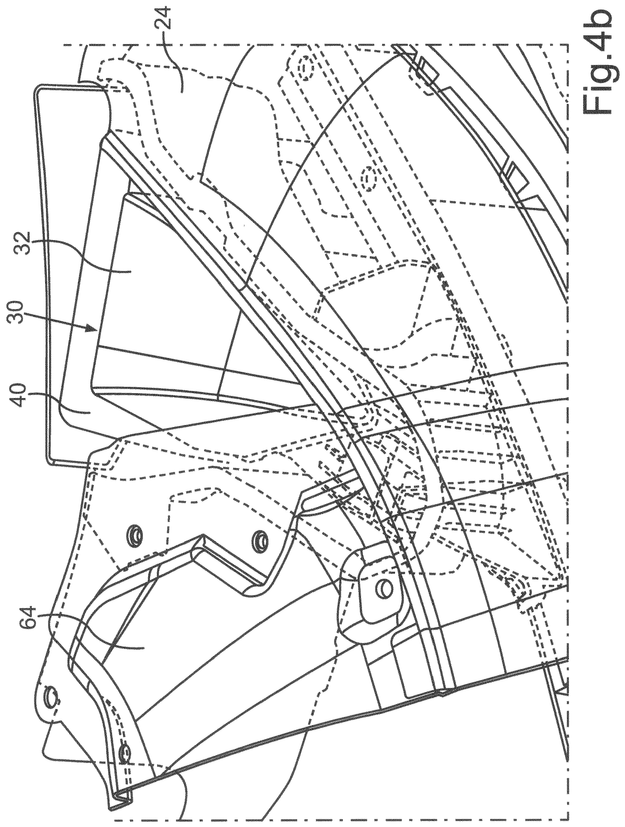

In den Fig. 4a und 4b ist jeweils in einer perspektivischen Unteransicht die Luftleiteinrichtung im Bereich einer der beiden seitlich vor dem zugehörigen Vorderrad 14 angeordneten Luftleitelemente 30 erkennbar. In Fig. 4a ist das Luftleitelement dabei in seiner Leitstellung, also nach unten ausgefahren, dargestellt. In Fig. 4b ist das Luftleitelement 30 zumindest teilweise beziehungsweise im vorliegenden Fall sogar zumindest im Wesentlichen vollständig in der eingefahrenen Stellung in dem Gehäuse 40 aufgenommen. Gemäß Fig. 4a ist dabei insbesondere erkennbar, dass das Luftleitelement 30, das von vorne her an das Luftleitelement 30 angrenzende Verkleidungselement 24 sowie ein weiteres Unterbodenverkleidungselement 64 auf die Form des sich in der Leitstellung befindenden Luftleitelement 30 abgestimmt sind. Zwischen den Verkleidungselementen 24 beziehungsweise 64 und dem Luftleitelement 30 sind demzufolge lediglich enge Spalte 66 beziehungsweise Fugen ausgebildet.

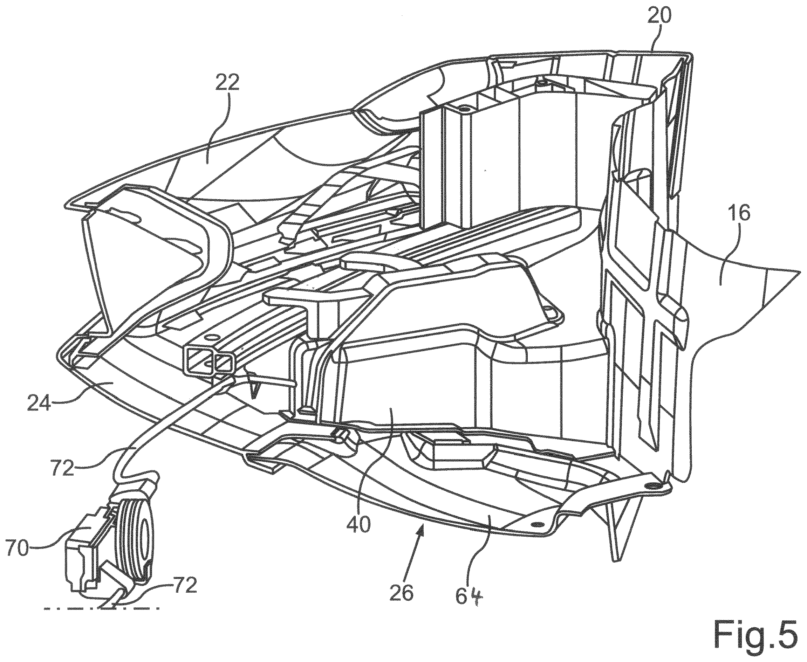

In Fig. 5 sind in einer perspektivischen Schnittansicht die Verkleidungselemente 20, 22, 24 des Frontendmoduls des Personenkraftwagens sowie das Verkleidungselement 64 der Unterbodenverkleidung 26 mit der darin integrierten Luftleiteinrichtung von einer Innenseite des Kraftwagens her dargestellt. Zudem erkennbar ist die Radhausverkleidung 16.

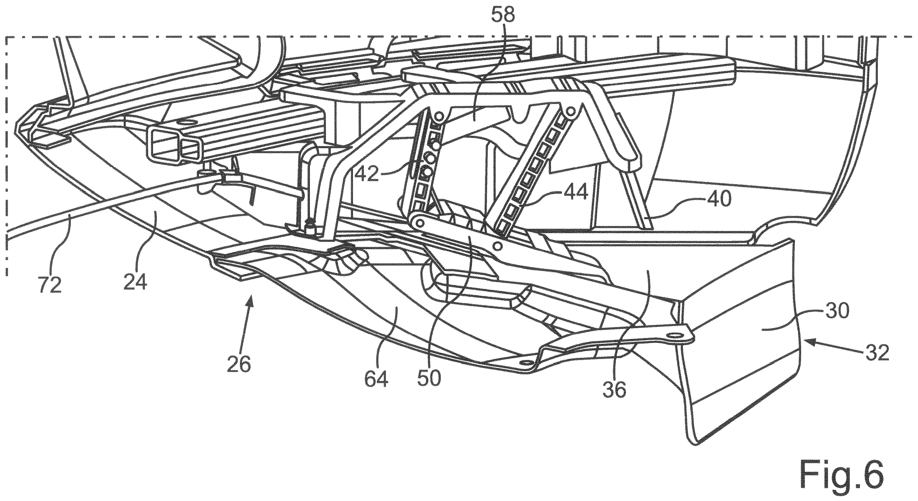

Fig. 6 zeigt analog zur Darstellung gemäß Fig. 5 die Luftleiteinrichtung 28 im Bereich der jeweiligen Verkleidungselemente 20 bis 24 und 64. Im Unterschied zur Darstellung gemäß Fig. 5 ist in Fig. 6 insbesondere das Gehäuse 40 geschnitten dargestellt, sodass die Verlagerungskinematik 38 erkennbar ist.

In Zusammenschau der Figuren 5 und 6 wird dabei ersichtlich, dass die Verlagerungskinematik mit einer Verlagerungseinheit verbunden ist, welche einen Aktuator 70 umfasst. Der Aktuator 70 ist über ein Zugmittel 72 in Form eines Bowdenzugs mit der Viergelenkhebelkinematik, genauer gesagt dem Lenkerhebel 42, verbunden. Im vorliegenden Ausführungsbeispiel ist überdies der Aktuator 70 auch mit dem Luftleitelement 30 auf der anderen Fahrzeugseite verbunden. Mit anderen Worten werden beide Luftleitelemente 30 vor den zugehörigen Vorderrädern 14 mittels ein und desselben Aktuators 70 betätigt.

Über diesen Aktuator 70 können die Luftleitelemente 30 gegen die Federkraft des jeweiligen Federelements 58 aus der Leitstellung in die eingefahrene Stellung gezogen werden. Zum Ausfahren der Luftleitelemente 30 dient umgekehrt wiederum die Federkraft der jeweiligen Federelemente 58, sodass das Zugmittel 72 lediglich durch den Aktuator 70 freigegeben werden muss. Mittels des Aktuators 70 ist somit eine geschwindigkeitsabhängige Regelung der jeweiligen Stellung der Luftleitelemente 30 möglich. Insbesondere ist es hierbei denkbar, dass die jeweiligen Luftleitelemente beziehungsweise Radspoiler 30 bei Geschwindigkeiten oberhalb von 60 km/h ausgefahren in der Leitstellung angeordnet sind und bei Geschwindigkeiten unterhalb von 60 km/h pro Stunde eingefahren sind, da sich unterhalb dieser Geschwindigkeit nur geringe aerodynamische Effekte einstellen. Das bedeutet auch, dass bei einem wesentlichen Teil von innerorts und auch im freien Gelände stattfindenden Fahrten des Kraftwagens, bei denen aufgrund der relativ geringen Fahrgeschwindigkeit die gewünschten Effekte durch das jeweilige Luftleitelement nicht oder nur in geringem Maße vorhanden sind beziehungsweise auftreten, das jeweilige Luftleitelement in seiner eingefahrenen Schutz- beziehungsweise Nichtgebrauchsstellung angeordnet ist und somit nicht durch auf dem Boden befindliche Hindernisse beschädigt werden kann. Vorzugsweise wird das Luftleitelement erst ab einer bestimmten Fahrgeschwindigkeit - vorzugsweise automatisch mittels einer entsprechenden Steuerung - ausgefahren, bei welcher zumindest ausreichend aerodynamische Effekte erzielt werden.

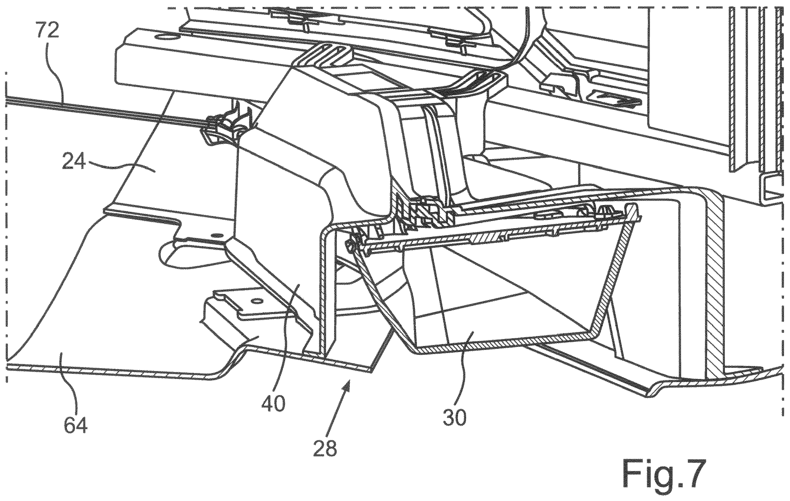

Schließlich zeigt Fig. 7 in einer perspektivischen Schnittansicht nochmals die Unterbringung des Luftleitelements 30 in der eingefahrenen Stellung innerhalb des Gehäuses 40. Durch das Gehäuse 40 ergibt sich dabei eine vollständige Kapselung des Bauraums des Luftleitelements mittels des Gehäuses 40. Zudem kann das Gehäuse 40 mit der Verlagerungskinematik 38 und dem jeweiligen Luftleitelement beziehungsweise Radspoiler 30 als vorfertigbare Baueinheit ausgebildet werden, welche dann im Bereich des Frontendmoduls oder anderweitig im Unterbodenbereich montiert werden kann. Das Gehäuse 40 ist vorzugsweise so ausgeführt, dass der Motorraum gegen Verschmutzung/Wasser-/Schneeeintrag abschirmt ist und die Abluftführung des Kühlsystems durch den aktiven Radspoiler nicht beeinflusst wird. Durch das Gehäuse 40 (Kapselung) wird eine negative Veränderung des Außengeräusches bei Einsatz aktiver Radspoiler ausgeschlossen.

Aus Fig. 2 ist erkennbar, dass der Lagerhebel 50 und der Deckel 36 einstückig ausgebildet sind und über die Verclipsungen 76 mit dem Luftleitelement 30 verbunden sind. Diese Verclipsungen 76 können gegebenenfalls als Opferteil gestaltet sein, falls es zu einem Fremdkörperkontakt mit einer Beschädigung kommen sollte.

Zusammenfassend bleibt festzuhalten, dass bei der erfindungsgemäßen Luftleiteinrichtung besonders vorteilhaft ist, dass im "Misuse"-Fall, also bei einem unbeabsichtigten Aufprall eines Fremdkörpers gegen den ausgefahrenen Radspoiler/Luftleitelement 30 dieses mittels der anhand der Figuren beschriebenen Mehrgelenkkinematik ohne deren Selbsthemmung zu aktivieren und gegen die Federkraft des Federelements 58 zerstörungsfrei einzuklappen ist. Hierzu bedarf es einer auf das Luftleitelement 30 wirkenden Kraft oder eines Impulses in z-Richtung, also in Fahrzeughochrichtung nach oben, das heißt weg von der Fahrbahn. Dies erfolgt über das auch als Anlaufkörper bezeichnete Luftleitelement 30, das primär eine aerodynamische Funktion hat. Dessen sekundäre Funktion ist eine Zerlegung der mittels eines Hindernisses auf das Luftleitelement 30 wirkenden Kraft mittels der in Richtung der Vorwärtsfahrtrichtung des Kraftwagens gesehen von hinten unten nach vorne oben verlaufenden und damit in der Art einer Rampe angeordneten Leitfläche 32. Durch den Aufprall eines Fremdkörpers auf die schräg nach vorne oben und damit in einem bestimmten Winkel zur Fahrbahn verlaufende Leitfläche 32 wird durch die Schräge des Anlaufkörpers eine Kraftkomponente in z-Richtung, das heißt in vertikaler Richtung nach oben weg von der Fahrbahn erzeugt, der den Radspoiler/das Luftleitelement 30 einschließlich seiner Verlagerungskinematik einfahren lässt.

Besonders vorteilhaft bei dem anhand der Figuren beschriebenen Ausführungsbeispiel der Luftleiteinrichtung ist weiterhin, dass das aktive Luftleitelement 30 im eingefahrenen Zustand kein Loch im Unterbodenbereich hinterlässt, was mittels des vorstehend beschriebenen, vorzugsweise topfähnlichen Gehäuses 40 realisiert wird. Dieses weist noch weitere Funktionen auf, nämlich
- Anbindung des aktiven Radspoilers an eine geeignete Struktur im Kraftwagenvorbau,
- Aufnahme der gesamten Verlagerungskinematik, inklusive der Festlagerstellen für die Hebel/Koppeln der Mehrgelenkmechanik,
- Abschirmung des entstehenden Loches im Unterboden vom Rest des Motorraums beziehungsweise eines Aggregateraums im Vorbaubereich oder Heckwagenbereich des Kraftwagens, was insbesondere zur Reduzierung des Außengeräuschs und aus Verschmutzungsgründen sinnvoll ist,
- aufgrund einer entsprechenden Formgebung kann das Gehäuse 40 teilweise die bisherigen Geometrien am Stoßfänger, Lower Stiffener (nur im Vorbaubereich des Kraftwagens) und Radhausschale mit übernehmen.

Das Gehäuse 40 beziehungsweise die Luftleiteinrichtung 28 ist vorzugsweise so ausgebildet, dass es als modulare Einheit, das heißt als Ganzes am Kraftwagen verbaut, das heißt eingesetzt werden kann. Selbstverständlich ist auch ein Austausch eines Gehäuses schnell und in einfacher Weise möglich. Nach einer Weiterbildung ist vorgesehen, dass die auf einer Höhe einer Achse des Kraftwagens auf beiden Seiten angeordneten Luftleiteinrichtungen 28, welche mittels eines gemeinsamen Aktuators 70 betrieben werden, zusammen mit diesen als eine bereits funktionsfähige Montageeinheit vormontiert und gemeinsam am Kraftwagen verbaut werden können. Aufwendige Kopplungs-/Verbindungsarbeiten während der Montage am Kraftwagen können hierdurch entfallen.

Besonders vorteilhaft an dem anhand der Figuren beschriebenen Ausführungsbeispiel des Antriebs zur Verlagerung des Luftleitelements 30 ist, dass hierfür ein gemeinsamer Aktuator 70 für die beiden, auf Höhe der Vorder- oder Hinterräder angeordneten Luftleitelemente 30 vorgesehen ist. Hierzu ist der Aktuator 70 über zumindest einen Bowdenzug antriebswirksam mit diesen Luftleitelementen 30 gekoppelt. Dadurch, dass der Antrieb so ausgebildet ist, dass der Aktuator 70 den jeweiligen aktiven Radspoiler/das Luftleitelement 30 gegen die Federkraft in die eingefahrene Position zieht und der Radspoiler/das Luftleitelement 30 in seiner ausgefahrenen Position vom Antrieb nicht kraftbeaufschlagt ist beziehungsweise werden muss, kann beim Aufprall eines Hindernisses das jeweilige Luftleitelement einfach zurück- beziehungsweise in die eingefahrene Stellung verschoben werden, wobei hierbei der Bowdenzug diese Verlagerung nicht blockiert und vorzugsweise nur eine Schlaufe ausbildet. Eine Entkopplung des Antriebs vom Luftleitelement in dessen ausgefahrener Stellung ist daher bei dieser Art von Antrieb nicht erforderlich und auch nicht vorgesehen, sodass dieser besonders kostengünstig ist.

Schließlich bleibt noch festzuhalten, dass bei einem besonders bevorzugten Ausführungsbeispiel der Luftleiteinrichtung 28 das jeweilige Luftleitelement 30 im Wesentlichen ohne äußere Kraft und vielmehr aufgrund seiner Gewichtskraft in die ausgefahrene Stellung verlagert wird. Das Federelement 58 dient im Wesentlichen zur Aufnahme der dynamischen Massen und zum Gegenhalten des Staudrucks im Fahrbetrieb. Damit wird ein Flattern des Luftleitelements 30 vermieden.

## Patentansprüche

1. Luftleiteinrichtung (28) für den Unterbodenbereich eines Kraftwagens, mit wenigstens einem Luftleitelement (30), welches als in Fahrzeuglängsrichtung vor einem zugeordneten Rad des Kraftwagens angeordneter Radspoiler ausgebildet ist und aus einer ausgefahrenen Leitstellung, in welcher das Luftleitelement (30) mit einer in Fahrzeuglängsrichtung in einem vorderen Bereich des Luftleitelements (30) vorgesehenen Leitfläche (32) eine in Vorwärtsfahrtrichtung (12) des Kraftwagens im Unterbodenbereich auf das Luftleitelement (30) treffende Luftströmung umleitet, in eine zumindest teilweise eingefahrene Stellung mittels einer Verlagerungskinematik (38) verlagerbar ist, wobei das zumindest in einem Teilbereich als Rampe ausgebildete Luftleitelement (30) mittels der Verlagerungskinematik (38) in einer überlagerten Verlagerungsbewegung in Fahrzeuglängsrichtung nach hinten und in Fahrzeughochrichtung nach oben verlagerbar ist und bei einer in Fahrzeuglängsrichtung auf das Luftleitelement (30) wirkenden hindernisbedingten Kraftkomponente (F_{H}) in Richtung der eingefahrenen Stellung zurückdrängbar ist, **dadurch gekennzeichnet, dass** die Verlagerungskinematik (38) einer ein Federelement (50) umfassenden Verlagerungseinheit zugeordnet ist, dass das Luftleitelement (30) mittels des Federelements (50) aus der eingefahrenen Stellung in die Leitstellung verstellbar und/oder in der Leitstellung gegen einen Anschlag (74) haltbar ist, und dass ein Aktuator (70) der Verlagerungseinheit über ein Zugmittel (72) mit dem Luftleitelement (30) verbunden ist.

2. Luftleiteinrichtung (28) nach Anspruch 1,
**dadurch gekennzeichnet, dass** die Verlagerungskinematik (38) als Mehrgelenkshebelkinematik ausgebildet ist.

3. Luftleiteinrichtung nach einem der vorhergehenden Ansprüche,
**dadurch gekennzeichnet, dass** mittels der Verlagerungseinheit eine Mehrzahl von Luftleitelementen (30), insbesondere ein jeweiliger Radspoiler pro Fahrzeugseite, aus der eingefahrenen Stellung in die Leitstellung verstellbar ist.

4. Luftleiteinrichtung nach einem der Ansprüche 1 bis 3,
**dadurch gekennzeichnet, dass**
das jeweilige Luftleitelement (30) mit zugeordneter Verlagerungskinematik (38) in einem Gehäuse (40) gelagert aufgenommen ist.

5. Kraftwagen mit einer Luftleiteinrichtung (28) nach einem der Ansprüche 1 bis 4.

## Claims

1. Air guiding device (28) for the underbody region of a motor vehicle, comprising at least one air guiding element (30), which is designed as a wheel spoiler arranged in front of an assigned wheel of the motor vehicle in the vehicle longitudinal direction, and which is displaceable from an extended guiding position, in which the air guiding element (30) comprising a guiding surface (32) provided in a front region of the air guiding element (30) in the vehicle longitudinal direction redirects an air flow which impinges in the forward direction of travel (12) of the motor vehicle on the air guiding element (30) in the underbody region, into an at least partially retracted position by means of a displacement kinematic means (38), the air guiding element (30), which is designed as a ramp at least in a subregion, being displaceable by means of the displacement kinematic means (38) in a superimposed displacement movement in the vehicle longitudinal direction towards the rear and in the vehicle vertical direction towards the top, and, in the case of an obstacle-induced force component (F_{H}) acting on the air guiding element (30) in the vehicle longitudinal direction, being able to be pushed back towards the retracted position, **characterized in that** the displacement kinematic means (38) is assigned to a displacement unit comprising a spring element (50), **in that** the air guiding element (30) can be adjusted by means of the spring element (50) from the retracted position into the guiding position and/or can be held in the guiding position against a stop (74), and **in that** an actuator (70) of the displacement unit is connected to the air guiding element (30) via a traction means (72).

2. Air guiding device (28) according to claim 1,
**characterized in that** the displacement kinematic means (38) is a multi-joint lever kinematic means.

3. Air guiding device according to either of the preceding claims,
**characterized in that** by means of the displacement unit, a plurality of air guiding elements (30), in particular one wheel spoiler per vehicle side, can be adjusted from the retracted position into the guiding position.

4. Air guiding device according to any of claims 1 to 3,
**characterized in that**
the relevant air guiding element (30), together with the assigned displacement kinematic means (38), is mounted in a housing (40).

5. Motor vehicle comprising an air guiding device (28) according to any of claims 1 to 4.

## Revendications

1. Dispositif de guidage d'air (28) pour la zone du dessous de caisse d'un véhicule automobile, comportant au moins un élément de guidage d'air (30) réalisé sous la forme d'un becquet de roue qui est disposé devant une roue associée du véhicule automobile dans la direction longitudinale de véhicule et peut être déplacé, au moyen d'une cinématique de déplacement (38), d'une position de guidage déployée, dans laquelle l'élément de guidage d'air (30) dévie, avec une surface de guidage (32) prévue dans une zone avant de l'élément de guidage d'air (30) dans la direction longitudinale de véhicule, un flux d'air qui rencontre l'élément de guidage d'air (30) dans la zone du dessous de caisse dans la direction de la marche avant (12) du véhicule automobile, à une position au moins partiellement rétractée, dans lequel l'élément de guidage d'air (30) réalisé au moins dans une zone partielle sous forme de rampe peut être déplacé, au moyen de la cinématique de déplacement (38), dans un mouvement de déplacement superposé vers l'arrière dans la direction longitudinale de véhicule et vers le haut dans la direction de la hauteur de véhicule et peut être repoussé en direction de la position rétractée lorsqu'une composante de force (F_{H}) due à un obstacle agit sur l'élément de guidage d'air (30) dans la direction longitudinale de véhicule, **caractérisé en ce que** la cinématique de déplacement (38) est associée à une unité de déplacement comprenant un élément élastique (50), **en ce que** l'élément de guidage d'air (30) peut être réglé, au moyen de l'élément élastique (50), de la position rétractée vers la position de guidage et/ou peut être maintenu dans la position de guidage contre une butée (74), **et en ce qu'**un actionneur (70) de l'unité de déplacement est relié à l'élément de guidage d'air (30) par l'intermédiaire d'un moyen de traction (72).

2. Dispositif de guidage d'air (28) selon la revendication 1,
**caractérisé en ce que** la cinématique de déplacement (38) est réalisée comme une cinématique à plusieurs leviers articulés.

3. Dispositif de guidage d'air selon l'une des revendications précédentes,
**caractérisé en ce que,** au moyen de l'unité de déplacement, une pluralité d'éléments de guidage d'air (30), en particulier un becquet de roue respectif par côté de véhicule, peuvent être réglés de la position rétractée à la position de guidage.

4. Dispositif de guidage d'air selon l'une des revendications 1 à 3,
**caractérisé en ce que**
l'élément de guidage d'air (30) respectif est logé de manière à être monté dans un boîtier (40) avec une cinématique de déplacement (38) associée.

5. Véhicule automobile comportant un dispositif de guidage d'air (28) selon l'une des revendications 1 à 4.
